# EUROPÄISCHE PATENTANMELDUNG

(11) **EP 4 494 529 A1**
(43) Veröffentlichungstag der Anmeldung: **22.01.2025**
(21) Anmeldenummer: 24189296.7
(22) Anmeldetag: 17.07.2024
(51) Int. Cl.: A47G 25/06

(54) **WANDHAKEN MIT EINEM BEFESTIGUNGSSTEG**

(30) Priorität: 18.07.2023 DE 202023104021 U
(71) Anmelder: F & S Metallverarbeitung GmbH & Co. KG, 78256 Steißlingen (DE)
(72) Erfinder: Steiner, Stefan, 78256 Steisslingen (DE); Steiner, Frank, 78256 Steisslingen (DE)
(74) Vertreter: Heyerhoff Geiger GmbH & Co. KG

(57) **Zusammenfassung**

Wandhaken (10) aufweisend einen Grundkörper (12) mit einem Aufnahmeabschnitt (14), mittels welchem ein Objekt entgegen einer Lotrichtung (16) haltbar ist, und einen Befestigungssteg (18), welcher einen Endabschnitt des Wandhakens (10) bildet.

## Beschreibung

Die Erfindung betrifft einen Wandhaken zur Aufnahme eines Objekts entgegen einer Lotrichtung.

Zum Zwecke einer Befestigung eines Wandhakens sind bereits mehrere Möglichkeiten bekannt. Eine kostengünstige Möglichkeit besteht in der Verwendung doppelseitigen Klebebands. Eine solche Befestigung des Wandhakens ist jedoch zumeist nicht von langer Dauer. Zudem weist ein auf diese Weise befestigter Wandhaken meist eine nur geringe Belastbarkeit auf. Daher werden Wandhaken häufig mit einer Wand verschraubt. Je nach Beschaffenheit der Wand können zusätzlich Dübel zum Zwecke einer sicheren Befestigung des Wandhakens benötigt werden. Zwar kann auf diese Weise eine belastbare Befestigung des Wandhakens erreicht werden. Jedoch ist hierfür ein tiefgreifender Eingriff in die Wand erforderlich. Dabei besteht die Gefahr, dass sanitärtechnische oder elektrische Leitungssysteme beschädigt werden. Um diese Beschädigungen zu beheben, ist üblicherweise eine großräumige und damit aufwändige Öffnung der Wand erforderlich. Ferne kann die Befestigung des Wandhakens mittels einer Schraubverbindung zu einer irreparablen Beschädigung von Wandbelagselementen führen, in welche die Dübel und/oder die Schrauben eingebracht werden sollen. Im Falle von kleineren Beschädigungen können diese während eines Benutzungszeitraums des Wandhakens meist von diesem verdeckt werden. Sind die Beschädigungen dahingegen nicht von dem Wandhaken verdeckbar, ist meist ein Austausch eines betroffenen Wandbelagselements erforderlich, um einen ästhetischen Gesamteindruck der Wand beizubehalten. Aus diesem Grund ist zudem zumeist ein Austausch des betroffenen Wandbelagselements nach einer Demontage des Wandhakens erforderlich.

Aufgabe der Erfindung ist es, eine verbesserte Befestigungsmöglichkeit für einen Wandhaken zu schaffen.

Diese Aufgabe wird gelöst durch einen Wandhaken mit den Merkmalen des Anspruchs 1.

Vorteilhafte Weiterbildungen sind jeweils Gegenstand abhängiger Unteransprüche.

Der erfindungsgemäße Wandhaken weist einen Grundkörper mit einem Aufnahmeabschnitt auf. Mittels des Aufnahmeabschnitts ist ein Objekt entgegen einer Lotrichtung haltbar. Zweckmäßigerweise ist das Objekt in einem zu einer Verwendung vorgesehenen Zustand des Wandhakens entgegen der Lotrichtung haltbar. Ein solches Objekt kann ein Handtuch, ein Badetuch, ein Duschtuch oder ein Kleidungstück sein, wie beispielsweise eine Jacke oder eine Hose. Des Weiteren weist der erfindungsgemäße Wandhaken einen Befestigungssteg auf. Dieser Befestigungssteg ist als ein Endabschnitt des Wandhakens vorgesehen. Zweckmäßigerweise bildet der genannte Endabschnitt einen Abschluss des Wandhakens und setzt sich darüber hinaus nicht fort. Vorzugsweise ist der Befestigungssteg einteilig mit dem Grundkörper ausgebildet. Zu diesem Zweck kann der Wandhaken beispielsweise als ein Gussteil oder als ein Biegeteil ausgebildet sein. In einer bevorzugten Weise ist dabei der Wandhaken derart einteilig ausgebildet, dass der Grundkörper frei von Fügestellen mit dem Befestigungssteg verbunden ist.

Mittels des genannten Befestigungsstegs kann der Wandhaken einfach montiert oder demontiert werden. Des Weiteren kann der Wandhaken dadurch ohne zusätzliche Befestigungsmittel an einer Wand befestigt werden. So kann auf einen tiefgreifenden Eingriff in eine Wand verzichtet werden. Eine Beschädigung von Leitungssystemen oder Wandbelagselementen kann auf diese Weise einfach verhindert werden. Zudem kann im Vergleich zu einer Klebeverbindung eine sichere und dauerhaft stabile Befestigungsmöglichkeit geschaffen werden.

Eine vorteilhafte Weiterbildung sieht vor, dass der Befestigungssteg an einer von dem genannten Aufnahmeabschnitt abgewandten Rückseite des Grundkörpers angeordnet ist. Vorzugsweise ist der Befestigungssteg ausschließlich an der genannten Rückseite angeordnet. Dies ermöglicht es, dass der Befestigungssteg in einem montierten Zustand vollständig in einem von der Wand begrenzten Zwischenraum aufgenommen werden kann. Zudem wird so eine vereinfachte Ausrichtung des Wandhakens während einer Montage ermöglicht.

Des Weiteren sieht eine vorteilhafte Weiterbildung vor, dass der Befestigungssteg eine Breite des Grundkörpers wenigstens einseitig überragt. Unter der genannten Breite soll im vorliegenden Zusammenhang eine Erstreckung des Grundkörpers in einer Richtung verstanden werden, welche, betrachtet in einem an einer Wand montierten Zustand sowie in einer zu einer Verwendung vorgesehenen Ausrichtung des Wandhakens, im Wesentlichen senkrecht zu der Lotrichtung sowie im Wesentlichen parallel zu einer Wandfläche der genannten Wand ist. Weist der Grundkörper eine uneinheitliche Breite auf, so betrifft die genannte Breite vorzugsweise eine Breite des Aufnahmeabschnitts des Grundkörpers. In einer bevorzugten Ausführungsform überragt der Befestigungssteg eine Breite des Grundkörpers beidseitig. Indem der Befestigungssteg den Grundkörper überragt, kann eine vergrößerte Wirkungsfläche des Befestigungsstegs erreicht werden. Damit kann eine Punktbelastung an der Wand vermieden werden. Stattdessen kann eine breite Krafteinleitung in die Wand ermöglicht werden.

Ferner sieht eine vorteilhafte Weiterbildung vor, dass die Breite des Befestigungsstegs wenigstens das 1,5-fache einer Breite des Grundkörpers beträgt. Vorzugsweise beträgt die Breite des Befestigungsstegs wenigstens das 2-fache der Breite des Grundkörpers. Besonders bevorzugt beträgt die Breite des Befestigungsstegs wenigstens das 3-fache der Breite des Grundkörpers.

Bei der genannten Breite des Befestigungsstegs handelt es sich im vorliegenden Zusammenhang um eine Erstreckung des Befestigungsstegs in einer Richtung, welche, betrachtet in einem an einer Wand montierten Zustand sowie in einer zu einer Verwendung vorgesehenen Ausrichtung des Wandhakens, im Wesentlichen senkrecht zu der Lotrichtung sowie im Wesentlichen parallel zu einer Wandfläche der genannten Wand ist. Damit bemisst sich die Breite des Befestigungsstegs auf dieselbe Weise wie die Breite des Grundkörpers.

Ein derart ausgestalteter Befestigungssteg ermöglicht eine zuverlässige und sichere Befestigung des Wandhakens. Des Weiteren kann so wirksam eine Fläche zum Zwecke einer vertikalen Krafteinleitung ausgedehnt werden. Dadurch kann eine hohe Belastung auf einer geringen Fläche vermieden werden.

Zudem sieht eine vorteilhafte Weiterbildung vor, dass der Grundkörper einen Schaft aufweist, mittels welchem der Aufnahmeabschnitt mit dem Befestigungssteg verbunden ist. Der Schaft erhöht eine Stabilität des Wandhakens. So können beispielsweise auf die Aufnahmefläche wirkende Torsionskräfte durch den Schaft aufgenommen werden. Zudem kann auf diese Weise eine Auflagefläche bereitgestellt werden, mittels welcher ein Teil einer Haltekraft quer zu einer Wandfläche in die Wand eingeleitet werden kann. Eine Belastung des Befestigungsstegs kann daher reduziert werden. Infolgedessen kann eine Belastungsfähigkeit des Wandhakens gesteigert werden.

Eine vorteilhafte Ausführungsvariante sieht vor, dass der Befestigungssteg und der Schaft mittels eines gekrümmten Abschnitts miteinander verbunden sind. Dies ermöglicht eine einfache Herstellung des Wandhakens. Zudem kann eine Stabilität des Wandhakens mittels der genannten Krümmung gesteigert werden. So können beispielsweise im Falle einer Entnahme des Objekts von dem Aufnahmeabschnitt auftretende Kräfte durch den gekrümmten Abschnitt abgefedert werden.

Des Weiteren wird eine vorteilhafte Weiterbildung vorgeschlagen, bei welcher als Befestigungssteg ein quaderförmiger Körper vorgesehen ist. Auf diese Weise kann der Wandhaken zuverlässig in einem von der Wand begrenzten Zwischenraum gelagert werden. Dabei bietet ein quaderförmiger Körper ausgedehnte Lagerflächen, mittels welchen eine Haltekraft über die genannte Lagerfläche verteilt in die Wand eingeleitet werden kann.

Vorteilhafterweise weist der genannte quaderförmiger Körper entlang wenigstens einer Seitenkante eine Fase auf. Bevorzugt weist diese Fase einen Winkel von im Wesentlichen 45° zu zwei Seitenflächen des genannten quaderförmiger Körpers auf. Ein Einbringen des Befestigungsstegs in einen Zwischenraum kann auf diese Weise vereinfacht werden. Des Weiteren kann eine Gefahr einer Beschädigung eines einen Zwischenraum begrenzenden Wandbelagselements verringert werden.

In einer weiteren vorteilhaften Weiterbildung wird vorgesehen, dass der Befestigungssteg wenigstens eine Ausnehmung aufweist. Auf diese Weise kann eine Verzahnung mit einem zum Zwecke einer Befestigung des Wandhakens vorgesehenen Materials erreicht werden. Ein Herausziehen des Befestigungsstegs kann damit auf eine einfache Weise behindert werden.

Als die genannte wenigstens eine Ausnehmung ist in einer vorteilhaften Ausführungsvariante eine den Befestigungssteg durchdringende Öffnung vorgesehen. Der Befestigungssteg kann so zum Zwecke einer Befestigung von dem genannten Material durchgegriffen werden. Dadurch ist der Befestigungssteg auf eine verbesserte Weise gegen ein Herausziehen gesichert. Des Weiteren ermöglicht dies, eine Belastbarkeit des Wandhakens zu steigern. Vorzugsweise ist die genannte Öffnung derart angeordnet, dass diese den Befestigungssteg in einer zu Verwendung vorgesehenen Ausrichtung in Lotrichtung durchdringt.

Eine weitere vorteilhafte Weiterbildung sieht wenigstens eine Ausnehmung in einem einseitig über eine Breite des Grundkörpers auskragenden Abschnitt des Befestigungsstegs vor. Ein Herauslösen des Befestigungsstegs in einem montierten Zustand kann so weiter erschwert werden.

In einer vorteilhaften Weise ist der Wandhaken mittels eines Eingriffs des Befestigungsstegs in einen von einer Wand begrenzten Zwischenraum befestigbar. Dadurch kann auf Befestigungsmittel wie Schrauben und/oder Dübel verzichtet werden. Des Weiteren kann so ein erforderlicher Montageaufwand reduziert werden.

In einer weiteren vorteilhafte Weiterbildung ist der Befestigungssteg dazu eingerichtet, in einen Zwischenraum einzugreifen, welcher von zueinander beabstandet angeordneten Wandbelagselementen begrenzt ist. Ein zum Zwecke einer Befestigung des Wandhakens zerstörender Eingriff in ein Wandbelagselement kann auf diese Weise vermieden werden. Des Weiteren kann der Wandhaken, vor einem Einbringen eines zur Befestigung des Wandhakens vorgesehenen Materials in den Zwischenraum, werkzeugfrei montiert werden. Nach einer Demontage kann die Montagestelle entweder für einen weiteren Wandhaken verwendet werden, welcher einen Befestigungssteg aufweist, oder die Montagestelle kann aufwandsgünstig verschlossen werden. Ein Austausch von Wandbelagselementen ist dabei nicht erforderlich. Vorzugsweise ist der Befestigungssteg dazu eingerichtet, in einen von Fliesen begrenzten Fugenabschnitt einzugreifen.

Ferner sieht eine vorteilhafte Ausführungsvariante vor, dass der Wandhaken mittels des Befestigungsstegs an einer frei wählbaren Stelle entlang eines sich in horizontaler Richtung erstreckenden Zwischenraums positionierbar ist. Insbesondere ist der Wandhaken mittels des Befestigungsstegs an einer frei wählbaren Stelle entlang eines sich in horizontaler Richtung erstreckenden Fugenabschnitts positionierbar. Auf diese Weise kann eine hohe Flexibilität bei der Wahl einer Anordnungsposition des Wandhakens bereitgestellt werden. So kann ein bereits vorhandener Fugenabschnitt zum Zwecke einer Befestigung des Wandhakens genutzt werden. Dies ermöglicht eine einfache und kostengünstige Anordnung des Wandhakens.

Des Weiteren sieht eine vorteilhafte Ausführungsvariante vor, dass der Wandhaken mittels eines Einbringens eines Füllmaterials in den genannten Zwischenraum befestigbar ist. Vorzugsweise handelt es sich um ein zementbasiertes oder silikonbasiertes Füllmaterial. Dies ermöglicht eine sichere und aufwandsgünstige Befestigung des Wandhakens. Zudem kann der Wandhaken auf diese Weise rückstandslos entfernt werden. Abgesehen von einem Entfernen des Füllmaterials ist kein Eingriff in die Wand erforderlich. Zudem kann der Wandhaken auf diese Weise ohne eine Beeinträchtigung der Wand oder der Wandbelagselemente demontiert werden. Dadurch kann eine ursprüngliche Montagestelle nachträglich nicht mehr als solche erkannt werden.

In einer weiteren vorteilhaften Weiterbildung ist der Befestigungssteg dazu eingerichtet, dass mittels dessen zumindest ein Teil einer auf den Wandhaken wirkenden Kraft in Lotrichtung in die Wand einleitbar ist. So kann der Wandhaken ohne Zuhilfenahme weiterer Befestigungsmittel einfach und aufwandsgünstig an der Wand abgestützt werden. Auftretende Haltekräfte können so zuverlässig in die Wand eingeleitet werden. Vertikal wirkende Haltekräfte können daher unmittelbar in die Wand eingeleitet werden. Ist als Befestigungssteg der quaderförmige Körper vorgesehen, so ist der Wandhaken in einem montierten Zustand vorzugsweise mittels einer der größten Seitenflächen des quaderförmigen Körpers gegen eine Bewegung in Lotrichtung abstützbar. So kann eine hohe Belastbarkeit des Wandhakens erzielt werden.

Nachfolgend wird die Erfindung anhand von Figuren näher erläutert. Soweit zweckdienlich sind in den Figuren gleichwirkende Elemente mit gleichen Bezugszeichen versehen. Die Erfindung ist nicht auf die in den Figuren dargestellten Ausführungsbeispiele und/oder Ausführungsvarianten beschränkt - auch nicht in Bezug auf funktionale Merkmale. Die bisherige Beschreibung wie auch die nachfolgende Figurenbeschreibung enthalten zahlreiche Merkmale, die in den abhängigen Unteransprüchen teilweise zu mehreren zusammengefasst wiedergegeben sind. Diese Merkmale wie auch alle übrigen oben und in der nachfolgenden Figurenbeschreibung offenbarten Merkmale wird der Fachmann jedoch auch einzeln betrachten und zu sinnvollen weiteren Kombinationen zusammenfügen. Insbesondere sind alle genannten Merkmale jeweils einzeln und in beliebiger geeigneter Kombination miteinander kombinierbar.

Es zeigen:
- Figur 1: eine perspektivische Ansicht eines Ausführungsbeispiels eines Wandhakens in einer schematischen Darstellung;
- Figur 2: eine schematische Frontansicht des Ausführungsbeispiels des Wandhakens in einer zu einer Verwendung vorgesehenen Ausrichtung;
- Figur 3: eine schematische Darstellung einer Seitenansicht des Ausführungsbeispiels des Wandhakens, welcher in einem von Wandbelagselementen begrenzten Zwischenraum angeordnet ist.

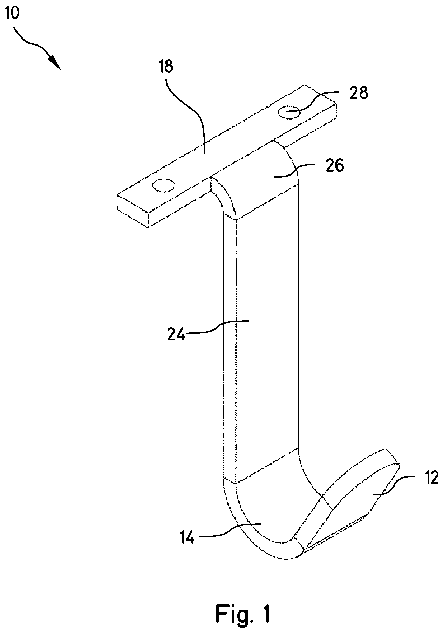

Figur 1 zeigt eine perspektivische Ansicht eines schematisch dargestellten Wandhakens 10. Dieser Wandhaken 10 weist einen Grundkörper 12 mit einem Aufnahmeabschnitt 14 auf. Der Aufnahmeabschnitt 14 ist beispielhaft gekrümmt ausgebildet. Auf diese Weise ist mittels des Aufnahmeabschnitts 14 ein Objekt entgegen einer Lotrichtung 16 haltbar. Ein solches Objekt kann beispielsweise ein Handtuch oder ein Kleidungsstück sein. Des Weiteren weist der in Figur 1 gezeigte Wandhaken 10 einen Befestigungssteg 18 auf. Dieser Befestigungssteg 18 bildet einen Endabschnitt des Wandhakens 10. Jenseits des Befestigungsstegs 18 setzt sich der Wandhaken 10 daher nicht weiter fort.

In dem vorliegend beschriebenen Ausführungsbeispiel des Wandhakens 10 ist der genannte Befestigungssteg 18 an einer von dem vorgenannten Aufnahmeabschnitt 14 abgewandten Rückseite des Grundkörpers 12 angeordnet. Beispielhaft weist der Grundkörper 12 einen Schaft 24 auf. Mittels des Schafts 24 ist vorliegend der Aufnahmeabschnitt 14 mittels eines gekrümmten Abschnitts 26 mit dem Befestigungssteg 18 verbunden.

Der Schaft 24 ermöglicht es, dass eine auf den Wandhaken 10 wirkende Kraft zumindest teilweise in einer Richtung quer zu einer durch eine Wand 34 aufgespannten Ebene in diese Wand 34 einleitbar ist. Damit kann der Befestigungssteg 18 entlastet werden und eine erhöhte Belastbarkeit des Wandhakens 10 bereitgestellt werden.

Der an der Rückseite des Wandhakens 10 angeordnete Befestigungssteg 18 ist vorliegend als quaderförmiger Körper ausgebildet. Beispielhaft weist dieser zwei größte Seitenflächen auf. Eine dieser größten Seitenflächen des quaderförmigen Körpers ist dabei zum Zwecke einer Lagerung des Wandhakens 10 in einem zunächst nicht näher dargestellten Zwischenraum 30 der Wand 34 vorgesehen. Dabei weist der Befestigungssteg 18 beispielhaft zwei Ausnehmungen 28 auf. Beispielhaft sind diese jeweils als eine zylindrische Ausnehmung 28 gebildet, welche eine kreisförmige Grundfläche aufweisen. Diese zwei Ausnehmungen 28 durchdringen den Befestigungssteg 18 vollständig.

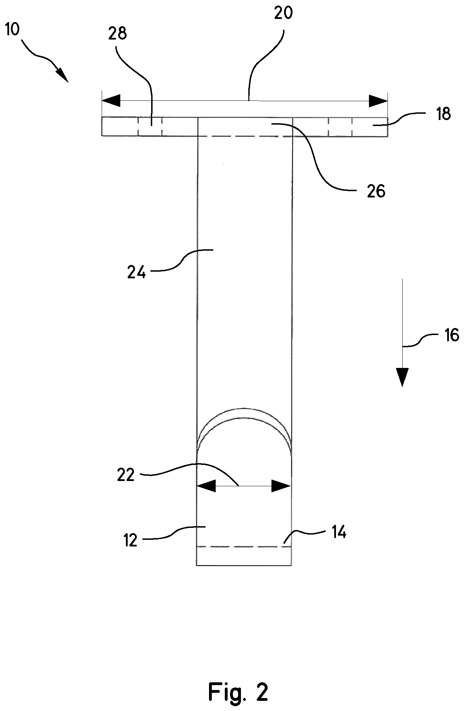

Figur 2 zeigt schematisch eine Frontansicht des im Zusammenhang mit Figur 1 beschriebenen Ausführungsbeispiels des Wandhakens 10 in einer zur Verwendung vorgesehenen Ausrichtung.

Im vorliegenden Ausführungsbeispiel des Wandhakens 10 ist der Befestigungssteg 18 derart ausgebildet, dass dieser eine Breite 22 des Grundkörpers 12 beidseitig überragt. Zu diesem Zweck weist der Befestigungssteg 18 beispielhaft eine Breite 20 auf, welche das 3-fache der Breite 22 des Grundkörpers 12 beträgt. So kann eine stabile und zuverlässige Befestigung des Wandhakens 10 erreicht werden.

Des Weiteren zeigt Figur 2 beispielhaft, dass die vorgenannten zwei Ausnehmungen 28 den Befestigungssteg 18, betrachtet in der zu einer Verwendung vorgesehenen Ausrichtung, jeweils in Lotrichtung 16 durchdringen. Des Weiteren ist beispielhaft jeweils eine der zwei genannten Ausnehmungen 28 in einem einseitig über eine Breite 22 des Grundkörpers 12 auskragenden Abschnitt des Befestigungsstegs 18 angeordnet. Eine Zuverlässigkeit und Belastbarkeit der Befestigung wird dadurch gesteigert.

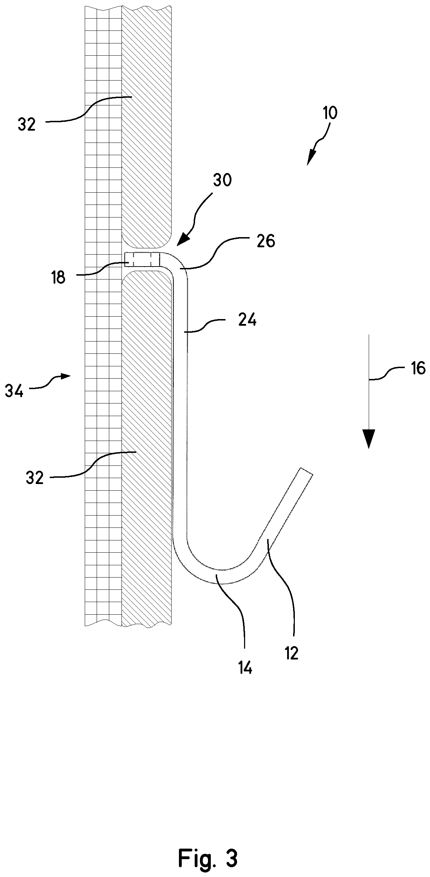

Figur 3 zeigt eine Seitenansicht des Ausführungsbeispiels des Wandhakens 10 sowie der Wand 34, welche Wandbelagselemente 32 aufweist, in einer schematischen Darstellung. Dabei ist der Befestigungssteg 18 in einem von Wandbelagselementen 32 gebildeten Zwischenraum 30 der Wand 34 angeordnet.

Beispielhaft handelt es sich bei den Wandbelagselementen 32 um Fliesen. Diese Fliesen sind derart voneinander beabstandet angeordnet, dass diese zum Zwecke eines Ausbildens einer Fuge den Zwischenraum 30 begrenzen. Der Befestigungssteg 18 greift damit in einen Fugenabschnitt zwischen den genannten Fliesen ein. Auf diese Weise ist der Wandhaken 10 an einer frei wählbaren Stelle entlang einer sich in horizontaler Richtung erstreckenden Fuge zwischen den als Fliesen ausgebildeten Wandbelagselementen 32 positionierbar. Zum Zwecke eines Einbringens des Befestigungselements 18 kann es daher erforderlich sein, ein bereits ausgehärtetes Fugenmaterial zum Zwecke eines Ausbildens des Zwischenraums 30 aus einem Abschnitt der Fuge zu entfernen. Ein tiefer gehender Eingriff in die Wand 34 ist allerdings nicht erforderlich. Daher besteht in diesem Fall keine Gefahr einer Beschädigung von mittels der Wand 34 verdeckten Leitungssystemen.

Der auf die vorgenannte Weise in dem Zwischenraum 30 angeordnete Wandhaken 10 ist mittels eines Einbringens eines Füllmaterials in den genannten Zwischenraum 30 befestigbar. Dabei ermöglicht die Ausnehmung 28 einen Durchgriff des Füllmaterials durch den Befestigungssteg 18. Damit kann eine zusätzliche Sicherung des Befestigungsstegs 18 gegen ein Heraustreten aus dem Zwischenraum 30 geschaffen werden. Alternativ oder zusätzlich ist denkbar, dass weitere Ausnehmungen vorgesehen sind, welche den Befestigungssteg 18 unvollständig durchdringen.

Auf die vorgenannte Weise ist der Wandhaken 10 mittels einer der zwei größten Seitenflächen des quaderförmigen Körpers des Befestigungsstegs 18 in dem Zwischenraum 30 derart gelagert, dass zumindest ein Teil einer auf den Wandhaken 10 wirkenden Kraft in Lotrichtung 16 in diese Wand 34 einleitbar ist. So ist eine in Lotrichtung 16 auf den Aufnahmeabschnitt 14 wirkende Haltekraft unmittelbar in die Wand 34 einleitbar. Zudem ist der Wandhaken 10 auf diese Weise gegen eine Bewegung in Lotrichtung 16 abstützbar.

### Bezugszeichenliste

- 10: Wandhaken
- 12: Grundkörper
- 14: Aufnahmeabschnitt
- 16: Lotrichtung
- 18: Befestigungssteg
- 20: Breite Befestigungssteg
- 22: Breite Grundkörper
- 24: Schaft
- 26: gekrümmter Abschnitt
- 28: Ausnehmung
- 30: Zwischenraum
- 32: Wandbelagselement
- 34: Wand

## Patentansprüche

1. Wandhaken (10) aufweisend
- einen Grundkörper (12) mit einem Aufnahmeabschnitt (14), mittels welchem ein Objekt entgegen einer Lotrichtung (16) haltbar ist;
- einen Befestigungssteg (18), welcher einen Endabschnitt des Wandhakens (10) bildet.

2. Wandhaken (10) nach Anspruch 1,
**dadurch gekennzeichnet,**
**dass** der Befestigungssteg (18) an einer von dem genannten Aufnahmeabschnitt (14) abgewandten Rückseite des Grundkörpers (12) angeordnet ist.

3. Wandhaken (10) nach Anspruch 1 oder 2,
**dadurch gekennzeichnet,**
**dass** der Befestigungssteg (18) eine Breite (22) des Grundkörpers (12) wenigstens einseitig, vorzugsweise beidseitig, überragt.

4. Wandhaken (10) nach einem der vorhergehenden Ansprüche,
**dadurch gekennzeichnet,**
**dass** eine Breite (20) des Befestigungsstegs (18) wenigstens das 1,5-fache, vorzugsweise wenigstens das 2-fache und besonders bevorzugt wenigstens das 3-fache, einer Breite (22) des Grundkörpers (12) beträgt.

5. Wandhaken (10) nach einem der vorhergehenden Ansprüche,
**dadurch gekennzeichnet,**
**dass** der Grundkörper (12) einen Schaft (24) aufweist, mittels welchem der Aufnahmeabschnitt (14) mit dem Befestigungssteg (18) verbunden ist.

6. Wandhaken (10) nach Anspruch 5,
**dadurch gekennzeichnet,**
**dass** der Befestigungssteg (18) und der Schaft (24) mittels eines gekrümmten Abschnitts (26) miteinander verbunden sind.

7. Wandhaken (10) nach einem der vorhergehenden Ansprüche,
**dadurch gekennzeichnet,**
**dass** als Befestigungssteg (18) ein quaderförmiger Körper vorgesehen ist.

8. Wandhaken (10) nach einem der vorhergehenden Ansprüche,
**dadurch gekennzeichnet,**
**dass** der Befestigungssteg (18) wenigstens eine Ausnehmung (28) aufweist.

9. Wandhaken (10) nach Anspruch 8,
**dadurch gekennzeichnet,**
**dass** als die wenigstens eine Ausnehmung (28) eine den Befestigungssteg (18) durchdringende Öffnung vorgesehen ist.

10. Wandhaken (10) nach einem der vorhergehenden Ansprüche,
**dadurch gekennzeichnet,**
**dass** wenigstens eine Ausnehmung (28) in einem einseitig über eine Breite (22) des Grundkörpers (12) auskragenden Abschnitt des Befestigungsstegs (18) vorgesehen ist.

11. Wandhaken (10) nach einem der vorhergehenden Ansprüche,
**dadurch gekennzeichnet,**
**dass** der Wandhaken (10) mittels eines Eingriffs des Befestigungsstegs (18) in einen von einer Wand (34) begrenzten Zwischenraum (30) befestigbar ist.

12. Wandhaken (10) nach einem der vorhergehenden Ansprüche,
**dadurch gekennzeichnet,**
**dass** der Befestigungssteg (18) dazu eingerichtet ist, in einen Zwischenraum (30) einzugreifen, welcher von zueinander beabstandet angeordneten Wandbelagselementen (32) begrenzt ist.

13. Wandhaken (10) nach Anspruch 12,
**dadurch gekennzeichnet,**
**dass** der Wandhaken (10) mittels des Befestigungsstegs (18) an einer frei wählbaren Stelle entlang eines sich in horizontaler Richtung erstreckenden Zwischenraums (30) positionierbar ist.

14. Wandhaken (10) nach einem der Ansprüche 12 oder 13,
**dadurch gekennzeichnet,**
**dass** der Wandhaken (10) mittels eines Einbringens eines Füllmaterials in den Zwischenraum (30) befestigbar ist.

15. Wandhaken (10) nach einem der vorhergehenden Ansprüche,
**dadurch gekennzeichnet,**
**dass** mittels des Befestigungsstegs (18) zumindest ein Teil einer auf den Wandhaken (10) wirkenden Kraft in Lotrichtung (16) in eine Wand (34) einleitbar ist.
